# EUROPÄISCHE PATENTSCHRIFT

(11) **EP 0 764 802 B1**
(45) Veröffentlichungstag und Bekanntmachung des Hinweises auf die Patenterteilung: **15.12.1999**
(21) Anmeldenummer: 96114121.5
(22) Anmeldetag: 04.09.1996
(51) Int. Cl.: F16K 3/08, F16K 3/36

(54) **Absperr- und Regulierventil**
Shut-off and control valve
Vanne d'arrêt et de réglage

(30) Priorität: 20.09.1995 DE 19534849
(43) Veröffentlichungstag der Anmeldung: 26.03.1997
(73) Patentinhaber: FRIEDRICH GROHE AKTIENGESELLSCHAFT, D-58675 Hemer (DE)
(72) Erfinder: Körfgen, Harald, 58675 Hemer (DE); Gnauert, Werner, 58640 Iserlohn (DE)

(56) Entgegenhaltungen:
- EP-A- 0 071 066
- DE-U- 8 715 044

## Beschreibung

Die Erfindung betrifft ein Absperr- und Regulierventil, insbesondere für Wasserarmaturen, mit einer im Gehäuse unverdrehbar gehaltenen, wenigstens eine Durchtrittsöffnung und eine geglättete Sitzoberfläche aufweisenden Ventilscheibe aus Hartstoff, an der eine koaxial zur Mittelachse drehbare, ebenfalls aus Hartstoff hergestellte, wenigstens eine Durchtrittsöffnung aufweisende Ventilscheibe mit einer geglätteten Dichtfläche anliegt, wobei die Durchtrittsöffnungen außerhalb der Mitte der Scheiben angeordnet sind und in einer Ventilscheibe von der Dichtfläche aus exzentrisch zur Mittelachse wenigstens eine Vertiefung ausgebildet ist, die zumindest in geschlossener Ventilstellung vom Durchflußmedium beaufschlagt ist.
Ein Absperr- und Regulierventil dieser Gattung ist beispielsweise aus der DE-U-87 15 044.1 bekannt. Hierbei sind die Vertiefungen als Nuten außerhalb des Zentrums der Scheiben angeordnet. Sie sollen die Reibflächen der Scheiben mindern und als sogenannte Fettnester dienen. Bei derartigen Ventilen werden meist Ventilscheiben aus Keramikmaterial eingesetzt, wobei beim Zusammenmontieren die Dichtflächen der Scheiben mit einem Fettfilm versehen werden, um ein leichtgängiges Bewegen der Ventilscheiben zueinander zu ermöglichen. Bei der Benutzung des Ventils kann durch die Drehbewegungen der Ventilflächen zueinander der aufgetragene Fettfilm zum Teil wieder abgetragen werden. Gleichzeitig bilden sich, wie beobachtet wurde, Ablagerungen und Scheibenaufschotterungen, wobei die Aufschotterungen aus Abriebmaterial von den Keramikscheiben und Fettrückständen gebildet werden. Diese Ablagerungen und Aufschotterungen werden durch das Übergleiten der Durchtrittsöffnungen im wesentlichen wieder abgestreift und vom durchfließenden Medium Wasser weggespült, wobei der Wasserfilm ebenfalls eine gewisse Schmierung bewirkt.
Im Scheibenzentrum hingegen können die Ablagerungen und Aufschotterungen weder durch die Drehbewegung abgeschoben, noch können sie aus diesem Bereich fortgespült werden. Im scheibenmittigen Bereich verbleibt somit die eingebrachte Fettmenge bzw. es entsteht hier ein Fettpolster. Dies bedeutet, daß im Randbereich ein Spalt in der Dicke des Fettpolsters entstehen und zu einer Undichtigkeit des Ventils führen kann. Da im Neuzustand die gesamten Dichtflächen mit einem Fettfilm versehen sind, können Undichtigkeiten erst zu einem späteren Zeitpunkt auftreten, wenn das Fett und die Aufschotterungen aus den Randbereichen der Dichtflächen fortgespült sind.

Der Erfindung liegt die Aufgabe zugrunde, das im Oberbegriff des Anspruchs 1 angegebene Ventil zu verbessern und die Ventilscheiben so auszubilden, daß auch vom Scheibenzentrum aus ein Fortschwemmen von den aus Fett und Abrieb bestehenden Aufschotterungen ermöglicht wird.

Diese Aufgabe wird erfindungsgemäß dadurch gelöst, daß wenigstens eine Vertiefung die Mittelachse berührt oder geringfügig übergreift, so daß im Betrieb auch das Zentrum der Ventilscheiben in Verbindung mit der Ventilbetätigung vom Durchflußmedium benetzt wird.

Weitere Ausgestaltungen der Erfindung sind in den Ansprüchen 2 bis 6 angegeben.

Mit diesen erfindungsgemäßen Maßnahmen kann weitgehend ein unerwünschtes Undichtwerden des Absperr- und Regulierventils nach einer längeren Gebrauchsdauer unterbunden werden. Durch eine Einbringung von einer oder mehreren exzentrischen Vertiefungen an einer Ventilscheibe wird es ermöglicht, daß auch das Scheibenzentrum der Ventilscheiben vom Wasser benetzt wird und der Abrieb und das Fett in gleichem Maße weggespült werden kann.
In weiterer Ausgestaltung der Erfindung kann zweckmäßig die Ventilscheibe, in der die Vertiefung ausgebildet ist, mit einer entsprechenden, sich in die Durchtrittsöffnung hinein erstreckenden Wölbung versehen werden, so daß in der Schließstellung der Ventilscheiben eine gleichmäßige Scheibenüberdeckung gewährleistet wird.

Ein Ausführungsbeispiel der Erfindung ist in der Zeichnung dargestellt und wird im folgenden näher beschrieben. Es zeigt
- Figur 1: eine als drehbare Regulierscheibe ausgebildete Ventilscheibe in Draufsicht auf die Dichtfläche;
- Figur 2: eine drehfest gehaltene, als Ventilsitz wirkende Ventilscheibe in Draufsicht auf die Dichtfläche;
- Figur 3: die beiden in Figur 1 und 2 gezeigten Ventilscheiben, wobei die beiden Scheiben mit ihren Dichtflächen aneinander liegen und eine Absperrstellung zueinander einnehmen;
- Figur 4: die in Figur 3 gezeigte Ventilscheibenpaarung, wobei die drehbare Ventilscheibe zur drehfest gehaltenen Ventilscheibe um 135° im Uhrzeigersinn gedreht worden ist, so daß von den Ventilscheiben der Durchtrittsquerschnitt etwa zu 3/4 freigegeben ist;
- Figur 5: die in Figur 3 gezeigte Ventilscheibenpaarung, wobei die drehbare Ventilscheibe um 180° zu der drehfest gehaltenen Ventilscheibe im Uhrzeigersinn gedreht worden ist, so daß von den Ventilscheiben der maximale Durchtrittsquerschnitt freigegeben ist.

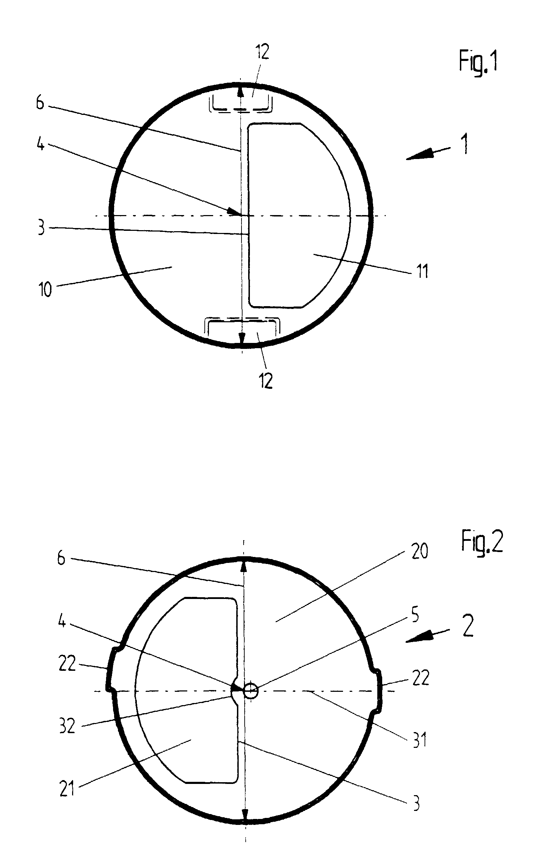

In Figur 1 ist eine aus Keramikmaterial hergestellte Ventilscheibe 1 gezeigt, die an die in Figur 2 gezeigte Ventilscheibe 2 drehbar angelagert wird. Die Ventilscheiben 1,2 sind für den Einbau in ein in der Zeichnung nicht dargestelltes bekanntes Ventilgehäuse vorgesehen. Die Ventilscheibe 2 wird dabei in dem Ventilgehäuse drehfest angeordnet. Zu diesem Zweck hat die Ventilscheibe 2 zwei etwa gegenüberliegende Radialvorsprünge 22, mit denen sie in entsprechende Längsnuten in dem Ventilgehäuse einfaßt. Die Ventilscheibe 1 ist dabei mit gegenüberliegenden Ausnehmungen 12 versehen, in die entsprechende Klauen einer in der Zeichnung nicht dargestellten, im Ventilgehäuse gelagerten Ventilspindel einfassen, derart, daß einerseits eine drehfeste Verbindung zwischen Ventilspindel und Ventilscheibe 1 hergestellt ist, und andererseits gegenüber dem anstehenden Wasserdruck eine axiale Abstützung erfolgt. Hierbei ist die als Ventilsitz wirkende, drehfest gehaltene Ventilscheibe 2 stromaufwärts angeordnet und liegt mit einer glatt geschliffenen Dichtfläche 20 an einer entsprechend geschliffenen Dichtfläche 10 der drehbaren Ventilscheibe 1 an. Beide Ventilscheiben 1 und 2 werden somit axial von der in der Zeichnung nicht dargestellten Ventilspindel abgestützt.
Die Ventilscheiben 1 und 2 haben jeweils in einer Hälfte eine Durchtrittsöffnung 11,21. Die Durchtrittsöffnungen 11,21 weisen dabei im Querschnitt die Form eines Kreissegments auf, wobei jeweils eine Basislinie 3, etwa parallel versetzt zum Durchmesser 6 der Ventilscheiben 1,2, die Durchtrittsöffnungen 11,21 auf der einen Scheibenhälfte begrenzen.

In der stromaufwärts angeordneten Ventilscheibe 2 ist, von der Dichtfläche 20 ausgehend, exzentrisch zur Mittelachse 4 eine als Sackloch ausgebildete Vertiefung 5 in der der Hälfte mit der Durchtrittsöffnung 21 gegenüberliegenden Hälfte der Ventilscheibe 2 ausgebildet. Die Vertiefung 5 ist hierbei auf einer senkrecht zur Basislinie 3 stehenden Mittellinie 31 angeordnet und berührt bzw. übergreift geringfügig die Mittelachse 4. Damit eine gleichbleibende Überdeckung der beiden Ventilscheiben 1 und 2 in der Absperrstellung sichergestellt ist, weist die Basislinie 3 konzentrisch zur Vertiefung 5 eine sich in die Durchtrittsöffnung 21 erstreckende Wölbung 32 auf.

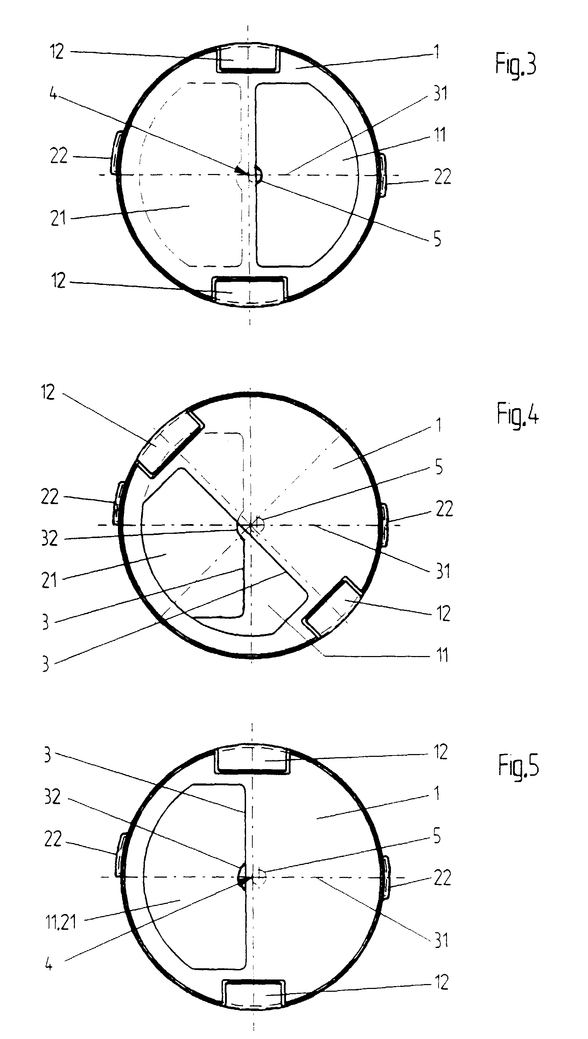

In den Figuren 3 bis 5 sind die Ventilscheiben 1 und 2 als Paar aneinander gelagert, wie sie in einem bekannten Ventilgehäuse - in der Zeichnung nicht dargestellt - angeordnet werden.
In Figur 3 sind die Ventilscheiben 1 und 2 in der Absperrstellung gezeigt, d. h. die Durchtrittsöffnung 21 der stromaufwärts gelegenen Scheibe 2 wird vor der stromabwärts gelegenen mit der Ventilspindel - in der Zeichnung nicht dargestellt - drehbaren Ventilscheibe 1 über die Dichtflächen 10 und 20 abgesperrt. In dieser Ventilscheibenstellung ist die Vertiefung 5 in der stromaufwärts gelegenen Ventilscheibe 2 über die Durchtrittsöffnung 11 der Ventilscheibe 1 mit dem im Ventilgehäuse vorhandenen Wasser verbunden.
In Figur 4 ist die Ventilscheibe 1 mit der in der Zeichnung nicht dargestellten Ventilspindel um 135° im Uhrzeigersinn zur drehfest gehaltenen Ventilscheibe 2 gedreht worden, so daß nunmehr die Durchtrittsöffnungen 21 und 11 sich zu einem 3/4 überdecken. Bei dieser Drehbewegung wandert die Vertiefung 5 um den Zentrumsbereich der Dichtfläche 10 der Ventilscheibe 1 und benetzt diesen Bereich mit Wasser.
In Figur 5 ist die drehbare Ventilscheibe 1 zur drehfest gehaltenen Ventilsitzscheibe 2 um 180° gedreht, so daß in dieser Stellung beide Durchtrittsöffnungen 11 und 21 sich überdecken.

Mit Hilfe der Vertiefung 5 kann somit in ausreichendem Maße das Scheibenzentrum mit Wasser benetzt werden, und dem Aufbau von abträglichen Aufschotterungen hinreichend entgegengewirkt werden, so daß eine etwa gleichbleibende Dichtheit der Ventilscheibenpaarung über einen langen Zeitraum gewährleistet wird.
Zweckmäßig kann die vorzugsweise als Sackbohrung ausgebildete Vertiefung 5 mit einem Durchmesser versehen werden, der etwa 1/20 des Außendurchmessers der Ventilscheiben 1,2 beträgt.

Insbesondere bei mehreren Durchtrittsöffnungen je Ventilscheibe können selbstverständlich auch mehrere Vertiefungen im Zentrum einer Ventilscheibe ausgebildet werden, so daß dann auch bei einem entsprechend reduzierten Drehwinkel der beiden Ventilscheiben zueinander eine ausreichende Benetzung des Scheibenzentrums gewährleistet wird.

## Patentansprüche

1. Absperr- und Regulierventil, insbesondere für Wasserarmaturen, mit einer im Gehäuse unverdrehbar gehaltenen, wenigstens eine Durchtrittsöffnung (21) und eine geglättete Sitzoberfläche aufweisenden Ventilscheibe (2) aus Hartstoff, an der eine koaxial zur Mittelachse (4) drehbare, ebenfalls aus Hartstoff hergestellte, wenigstens eine Durchtrittsöffnung (11) aufweisende Ventilscheibe (1) mit einer geglätteten Dichtfläche (10) anliegt, wobei die Durchtrittsöffnungen (21,11) außerhalb der Mitte der Scheiben angeordnet sind und in einer Ventilscheibe (2) von der Dichtfläche (20) aus exzentrisch zur Mittelachse (4) wenigstens eine Vertiefung (5) ausgebildet ist, die zumindest in geschlossener Ventilstellung vom Durchflußmedium beaufschlagt ist, dadurch gekennzeichnet, daß wenigstens eine Vertiefung (5) die Mittelachse (4) berührt oder geringfügig übergreift, so daß im Betrieb auch das Zentrum der Ventilscheiben (1,2) in Verbindung mit der Ventilbetätigung vom Durchflußmedium benetzt wird.

2. Absperr- und Regulierventil nach Anspruch 1, dadurch gekennzeichnet, daß die Vertiefung (5) als Sackloch ausgebildet ist.

3. Absperr- und Regulierventil nach Anspruch 1 oder 2, dadurch gekennzeichnet, daß in einer Hälfte der Ventilscheiben (1,2) je eine Durchtrittsöffnung (11,21) vorgesehen ist, die etwa im Querschnitt die Form eines Kreissegments aufweist, wobei jeweils eine Basislinie (3) etwa parallel versetzt zum Durchmesser (6) der Ventilscheiben (1,2) die Durchtrittsöffnungen (11,21) einerseits begrenzen, und die Vertiefung (5) als Sackloch senkrecht zur Basislinie (3) auf einer Mittellinie (31) versetzt in der gegenüberliegenden Hälfte der einen Ventilscheibe (2) ausgebildet ist, derart, daß die Wandung des Sackloches die Mittelachse (4) berührt oder geringfügig in Richtung der Durchtrittsöffnung (21) übergreift.

4. Absperr- und Regulierventil nach einem der Ansprüche 1 bis 3, dadurch gekennzeichnet, daß die Vertiefung (5) etwa einen Durchmesser aufweist, der etwa 1/20 des Außendurchmessers der Ventilscheiben (1,2) beträgt.

5. Absperr- und Regulierventil nach einem der Ansprüche 1 bis 4, dadurch gekennzeichnet, daß die Basislinie (3) der Durchtrittsöffnung (21) in der Ventilscheibe (2) mit der Vertiefung (5) konzentrisch zur Vertiefung eine Wölbung (32) in die Durchtrittsöffnung (21) aufweist.

6. Absperr- und Regulierventil nach einem der Ansprüche 1 bis 5, dadurch gekennzeichnet, daß die Vertiefung (5) in der stromaufwärts gelegenen Ventilscheibe (2) ausgebildet ist.

## Claims

1. A shut-off and regulating valve, especially for water fittings, comprising a valve disk (2) of hard material that is held non-rotatably in the housing and has at least one passage opening (21) and a smoothed seating surface, against which valve disk (2) a valve disk (1) that is rotatable coaxially with the central axis (4) and that is likewise made of hard material and has at least one passage opening (11) rests with a smoothed sealing face (10), the passage openings (21, 11) being arranged outside the centre of the disks and, in one valve disk (2), at least one depression (5) being formed outward from the sealing face (20) and eccentrically to the central axis (4), to which depression (5) flow medium is admitted at least in the closed position of the valve, characterised in that at least one depression (5) touches or slightly overlaps the central axis (4) so that, in operation, also the centre of the valve disks (1, 2) is wetted by flow medium in connection with operation of the valve.

2. A shut-off and regulating valve according to claim 1, characterised in that the depression (5) is in the form of a blind hole.

3. A shut-off and regulating valve according to claim 1 or 2, characterised in that a passage opening (11, 21) having in cross-section approximately the shape of a segment of a circle is provided in one half of each valve disk (1, 2), a base line (3) offset approximately parallel to the diameter (6) of the valve disks (1, 2) defining each of the passage openings (11, 21) on one side, and the depression (5) being formed as a blind hole offset perpendicular to the base line (3) along a central line (31) in the opposite half of the one valve disk (2) in such a manner that the wall of the blind hole touches the central axis (4) or slightly overlaps it in the direction of the passage opening (21).

4. A shut-off and regulating valve according to any one of claims 1 to 3, characterised in that the depression (5) has approximately a diameter that is approximately 1/20 of the outer diameter of the valve disks (1, 2).

5. A shut-off and regulating valve according to any one of claims 1 to 4, characterised in that the base line (3) of the passage opening (21) in the valve disk (2) having the depression (5) has a curved portion (32) concentric with the depression and extending into the passage opening (21).

6. A shut-off and regulating valve according to any one of claims 1 to 5, characterised in that the depression (5) is formed in the upstream valve disk (2).

## Revendications

1. Vanne d'obturation et de régulation, en particulier pour des robinetteries d'eau, comprenant un disque de vanne (2) en une matière dure, maintenu sans pouvoir tourner dans le boîtier, et présentant au moins un orifice de passage (21) et une surface de siège glacé, disque de vanne (2) sur lequel repose un disque de vanne (1), avec une surface d'étanchéité glacée (10), présentant au moins un orifice de passage (11), ce disque de vanne (11) pouvant tourner de façon coaxiale par rapport à l'axe médian (4), et étant également fabriqué en une matière dure, les orifices de passage (21, 11) étant disposés en dehors du milieu des disques et au moins un renfoncement (5) étant constitué dans un disque de vanne (2) à partir de la surface d'étanchéité (20) de façon excentrée par rapport à l'axe médian (4), renfoncement qui est alimenté en fluide d'écoulement au moins quand la vanne est dans sa position d'obturation,
caractérisée en ce qu'
au moins un renfoncement (5) touche ou vient légèrement en prise sur l'axe médian (4), de telle sorte qu'en fonctionnement même le centre des disques de vanne (1 et 2) est mouillé en liaison avec l'actionnement de la vanne par le fluide d'écoulement.

2. Vanne d'obturation et de régulation, selon la revendication 1,
caractérisée en ce que
le renfoncement (5) est constitué sous la forme d'un trou borgne.

3. Vanne d'obturation et de régulation, selon la revendication 1 ou 2,
caractérisée en ce que
dans une moitié des disques de vanne (1, 2) il est prévu chaque fois un orifice de passage (11, 21), qui présente en section transversale à peu près la forme d'un arc de cercle, une ligne de base (3) respectivement constituée de façon décalée à peu près parallèlement par rapport au diamètre (6) des disques de vanne (1, 2) délimitant d'une part les orifices de passage (11, 21), et le renfoncement (5), qui est constitué sous la forme d'un trou borgne, et qui est décalé perpendiculairement à la ligne de base (3) sur une ligne médiane (31) étant constitué dans la moitié opposée de l'un des disques de vanne (2), d'une manière telle que la paroi du trou borgne touche ou vienne légèrement en prise sur l'axe médian (4) en direction de l'orifice de passage (21).

4. Vanne d'obturation et de régulation, selon l'une des revendications 1 à 3,
caractérisée en ce que
le renfoncement (5) présente à peu près un diamètre qui atteint à peu près 1/20^{ème} du diamètre extérieur des disques de vanne (1, 2).

5. Vanne d'obturation et de régulation, selon l'une des revendications 1 à 4,
caractérisée en ce que
la ligne de base (3) de l'orifice de passage (21) présente dans le disque de vanne (2) avec le renfoncement (5) de façon concentrique au renfoncement un bombement (32) dans l'ouverture de passage (21).

6. Vanne d'obturation et de régulation, selon l'une des revendications 1 à 5,
caractérisée en ce que
le renfoncement (5) est constitué dans le disque de vanne (2), mis en amont.
